(19) Europäisches Patentamt
European Patent Office
Office européen des brevets

(11) **EP 2 365 359 B1**

(12) **FASCICULE DE BREVET EUROPEEN**

(45) Date de publication et mention
de la délivrance du brevet:
**24.10.2012 Bulletin 2012/43**

(51) Int Cl.:
***G01V 11/00*** *(2006.01)*

(21) Numéro de dépôt: **11290082.4**

(22) Date de dépôt: **11.02.2011**

(54) **Méthode de calage d'historique d'un modèle géologique**

Methode zum entwicklungsgeschichtlichen Abgleich von geologischen Modellen

Method of history matching a geological model

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.02.2010 FR 1000708**

(43) Date de publication de la demande:
**14.09.2011 Bulletin 2011/37**

(73) Titulaire: **IFP Energies nouvelles
92852 Rueil-Malmaison Cedex (FR)**

(72) Inventeur: **Verscheure, Marius
75013 Paris (FR)**

(56) Documents cités:
**WO-A1-02/082352      FR-A1- 2 725 794**

- **VERSCHEURE M., FOURNO A., CHILES J.P.:
"History Matching of a Realistic Stochastic Fault
Model using Fractal Geometry and the Gradual
Deformation Method", SOCIETY OF PETROLEUM
ENGINEERS, SPE, no. SPE129759, 14 juin 2010
(2010-06-14), - 17 juin 2010 (2010-06-17), pages
1-11, XP002603211, Barcelona, SP**
- **JENNI S., HU L.Y., BASQUET R., MARSILY G.,
BOURBIAUX B.: "History Matching of Stochastic
Models of Field-Scale Fractures: methodology
and Case Study", SOCIETY OF PETROLEUM
ENGINEERS, SPE, no. SPE90020, 26 septembre
2004 (2004-09-26), - 29 avril 2004 (2004-04-29),
pages 1-11, XP002603212, Houston, Tx**
- **PARNEY R., CLADOUHOS T., LA POINTE P.,
DERSHOWITZ W.: "Fracture and Production Data
Integration Using Discrete Fracture Network
Models for Carbonate Reservoir Management,
South Oregon Basin Field, Wyoming", SOCIETY
OF PETROLEUM ENGINEERS, SPE, no.
SPE60306, 2000, pages 1-7, XP002603213,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

**EP 2 365 359 B1**

**Description**

La présente invention concerne le domaine de l'exploitation de milieu souterrain, tel qu'un réservoir pétrolier.

Plus particulièrement, l'invention concerne une méthode de calage d'historique *(«history matching»)* d'un modèle géologique représentatif d'un réservoir souterrain, dans laquelle on ajuste la géométrie d'un réseau de failles afin de reproduire par la simulation les données observées.

L'étude d'un champ pétrolier, nécessite la construction de modèles, dits « modèles géologiques » au sens large. Ces modèles bien connus et largement utilisés dans l'industrie pétrolière, permettent de déterminer de nombreux paramètres techniques relatifs à la recherche, l'étude ou l'exploitation d'un réservoir d'hydrocarbures par exemple. En effet, ce modèle géologique est représentatif de la structure du réservoir ainsi que de son comportement. On peut ainsi par exemple déterminer quelles sont les zones qui ont le plus de chances de contenir des hydrocarbures, les zones dans lesquelles il peut être intéressant/nécessaire de forer un puits d'injection pour améliorer la récupération des hydrocarbures, le type d'outils à utiliser, les propriétés des fluides utilisés et récupérés.... Ces interprétations de modèles géologiques en termes de « paramètres techniques d'exploitation » sont bien connues des spécialistes, même si de nouvelles méthodes sont régulièrement développées. Il est donc crucial, dans le domaine pétrolier, de construire un modèle aussi précis que possible. Pour ce faire, l'intégration de toutes les données disponibles est indispensable.

Un modèle géologique constitue une maquette du sous-sol, représentative à la fois de sa structure et de son comportement. Généralement, ce type de maquette est représenté sur un ordinateur, et l'on parle alors de modèle numérique. En deux dimensions (2D), on parle de carte. Ainsi, une carte correspond à une image, constituée de pixels, chacun des pixels contenant une information relative au comportement du sous-sol étudié (un réservoir pétrolier par exemple). Ces pixels correspondent à une position géographique précise, et sont repérés par des coordonnées. Lorsque l'on attribue des valeurs à un pixel, par simulation par exemple, on parle alors de point de simulation. L'image représentative (la carte ou le modèle) est générée sur tout support (papier, écran d'ordinateur, ...).

Les réservoirs pétroliers sont en général des milieux poreux très hétérogènes et fracturés. Pour obtenir la meilleure image possible du réservoir, il est donc nécessaire, en plus des données statiques et dynamiques, d'intégrer les failles.

Une faille est une surface engendrée par une rupture en cisaillement séparant la roche en créant un rejet entre les deux blocs adjacents. On distingue deux types de failles dans un réservoir. Les failles sismiques sont de grands objets visibles sur les sondages sismiques. Ce sont des objets de taille importante (plusieurs centaines de mètres à plusieurs kilomètres). Les failles sub-sismiques sont des objets dont la taille n'est pas suffisamment élevée pour qu'ils soient visibles sur les images sismiques.

Le modèle géologique est une représentation du réservoir pétrolier, dans lequel la géométrie des failles est généralement représentée par des objets booléens. En deux dimensions, les failles sont représentées par des linéaments, en trois dimensions par des surfaces. A chaque objet sont associées des propriétés telles que la porosité, la perméabilité, l'ouverture effective, etc.

Les failles sismiques sont ajoutées de manière déterministe, telles qu'elles sont vues par la sismique. Les failles sub-sismiques qui sont invisibles, sont ajoutées par des procédés de construction dits « probabilistes » du fait de la limitation de l'information disponible (nombre de puits restreint, ...). De ce fait, les modèles géologiques construits à partir de ces procédés probabilistes sont appelés « modèles stochastiques ».

On peut citer entre autre les méthodes fractales. Celles-ci permettent de prendre en compte le caractère auto-similaire pour contraindre le modèle stochastique.

Puisqu'il est impossible de simuler directement l'écoulement dans un modèle objet (c'est-à-dire un modèle géologique dans lequel les failles sont représentées par des objets), les failles sont discrétisées sur une grille de simulation. Pour chaque maille du modèle d'écoulement, on calcule les propriétés équivalentes à la présence d'une faille (perméabilité, porosité, etc.). Cette grille de simulation permet d'obtenir des données de production simulées, qui sont comparées aux données réelles. Si l'écart est trop important, on modifie le modèle géologique de manière itérative, jusqu'à ce que les simulations soient comparables aux observations.

L'objectif de la méthode ici présentée est de déformer graduellement le réseau de failles pour effectuer le calage.

Il existe une méthode permettant d'effectuer le calage hydrodynamique d'un réseau de fractures par rapport aux données de production. Celle-ci est basée sur la déformation graduelle d'un modèle booléen en agissant sur le tirage poissonien de la position des objets. Cette méthode est décrite dans le document suivant (US 7483822 ou FR 2857764). L'application aux modèles de fractures est décrit dans:

- Lin Y. Hu and Sandra Jenni : History Matching of object-based stochastic reservoir models. SPE Journal, 10(3) no 81503, September 2005

Dans cette méthode, les positions de l'ensemble des failles sont modifiées pour reproduire l'historique de production. Le déplacement des failles est contrôlé par un nombre réduit de paramètres. Ces derniers peuvent alors

2

être optimisés pour réduire l'écart entre données simulées et données de production.

Cette méthode présente néanmoins plusieurs inconvénients. Tout d'abord, les paramètres d'entrée de l'algorithme qui génère les failles sont arbitraires et ne peuvent être reliés à des observations de terrain. Ensuite, les modèles générés ne sont pas réalistes d'un point de vue géologique.

Les méthodes fractales sont fréquemment utilisées pour modéliser les failles à l'aide de méthodes stochastiques. Celles-ci permettent de générer des réseaux d'objets autosimilaires à différentes échelles d'observation. L'avantage de ces méthodes est de générer des objets réalistes. De telles méthodes sont décrites dans:

- MC. Cacas, JM. Daniel, and J. Letouzey. Nested geological modelling of naturally fractured réservoirs. Petroleum Geoscience, 7 :S43-S52, 2001

- Bour, O and Ph. Davy, Connectivity of random fault networks following a power-law fault length distribution, Water Resour. Res. 33(7), 1567-1583, 1997

L'inconvénient de ces méthodes est qu'elles ne permettent pas de modifier les réseaux de failles ainsi générés, de façon à effectuer un calage hydrodynamique.

Ainsi l'invention concerne une méthode pour exploiter un milieu souterrain à partir d'un calage d'historique, dans lequel on construit un réseau de failles au moyen d'une description fractale du système de failles, et on modifie ce réseau au moyen d'une technique de déformation graduelle basée sur une technique de cascades multiplicatives.

**La méthode selon l'invention**

L'objet de l'invention concerne une méthode pour exploiter un milieu souterrain à partir d'une grille de simulation d'écoulement comportant un ensemble de cellules discrétisant ce milieu souterrain, et à partir de mesure de données dynamiques, dans laquelle on associe un réseau de failles à ladite grille de simulation d'écoulement. La méthode comporte les étapes suivantes:

   a. on construit ledit réseau de failles en réalisant les étapes suivantes :

      i- on construit une carte de densité multifractale au moyen d'une technique de cascades multiplicatives;

      ii- on construit une carte de centre de failles en réalisant un tirage aléatoire dans ladite carte de densité multifractale ;

      iii- on génère une faille pour chaque centre de failles;

   b. on réalise un calage d'historique de ladite grille en déformant ledit réseau de failles par une déformation continue de la carte de densité multifractale, puis en réitérant les étapes ii et iii, afin de reproduire par une simulation d'écoulement lesdites données dynamiques; et

   c. on exploite ledit milieu selon un schéma d'exploitation défini à partir de ladite grille ainsi calée.

La carte de densité multifractale peut être construite en réalisant les étapes suivantes :

- on choisit une dimension fractale Df des centres des failles que l'on souhaite générer;

- on construit ladite carte de densité multifractale au moyen d'une technique de cascades multiplicatives comprenant la subdivision de chaque cellule en p sous-cellules, l'attribution d'un poids à chacune desdites sous-cellules, lesdits poids étant définis en fonction de ladite dimension fractale, la multiplication de chaque poids de chaque sous-cellule par le poids de la cellule avant subdivision, ce procédé de subdivisions/multiplication par les poids de l'itération précédente étant répété jusqu'à obtenir une résolution choisie.

Selon un mode de réalisation, on peut subdiviser chaque cellule en quatre cellules, et on attribue de nouveaux poids P1, P1, P3 et P4 respectant le système suivant à chaque subdivision :

$$\begin{cases} P_1 + P_2 + P_3 + P_4 = 1 \\ P_1{}^2 + P_2{}^2 + P_3{}^2 + P_4{}^2 = 0.5^{Df} \\ P_i \geq 0 \end{cases}$$

Selon un autre mode de réalisation, on peut réutiliser le même ensemble de poids à chaque subdivision.

On peut générer une faille pour chaque centre de failles en considérant une orientation choisie ou tirée dans une première loi de probabilité et une longueur de faille choisie ou tirée dans une seconde loi de probabilité.

Selon l'invention, la déformation continue de la carte de densité multifractale est de préférence réalisée en définissant les poids à partir d'au moins un paramètre et en modifiant ce paramètre.

Enfin, selon l'invention, on peut modifier la position des failles de façon locale, après définition de zones géographiques sur la grille de simulation d'écoulement.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- La figure 1 illustre l'initialisation de l'algorithme des cascades multiplicatives.

- La figure 2 illustre la subdivision de chaque cellule en quatre, et l'attribution pour chacune d'elles d'un arrangement aléatoire des poids $P_i$.

- La figure 3 illustre l'étape de multiplication des valeurs des cellules subdivisées par celles avant subdivision.

- La figure 4 montre un exemple de carte de densité multifractale, obtenue après un nombre prédéfini d'itérations.

- La figure 5 montre la carte des centres de failles obtenue à partir de la carte de densité multifractale de la figure 4.

- La figure 6 illustre un réseau de faille, dont les longueurs sont tirées dans une loi puissance, obtenu à partir de la carte de la figure 5.

- La figure 7 illustre un réseau de failles de référence pour illustrer un exemple de réalisation de la méthode.

- La figure 8 illustre le réseau de faille initial construit selon l'invention.

- La figure 9 illustre les données de production issues d'une simulation sur le réseau de référence et sur le réseau initiale.

- La figure 10 illustre l'évolution de la fonction objectif lors du calage d'historique.

- La figure 11 illustre la géométrie du réseau de failles permettant de reproduire l'historique de production.

- La figure 12 illustre les données de production issues d'une simulation sur le réseau de référence et sur le réseau de failles optimal.

**Description détaillée de la méthode**

La méthode selon l'invention comporte quatre étapes principales :

1. Acquisition de données

2. Construction d'un réseau de failles

3. Déformation graduelle du réseau de faille

4. Calage des données dynamiques

1. Acquisition de données

L'invention concerne l'exploitation de milieu souterrain, tel qu'un champ pétrolier. L'étude d'un champ pétrolier, nécessite la construction d'un modèle géologique. Dans un premier temps on construit une discrétisation spatiale du champ pétrolier. Cette discrétisation est appelée grille de simulation car elle permet de réaliser des simulations d'écoulement au moyen d'un logiciel appelé simulateur d'écoulement. Une telle grille est constituée d'un ensemble de cellules. Cette grille peut être en deux ou trois dimensions. A chaque cellule on associe des propriétés pétrophysiques telles que la porosité, la perméabilité, les pressions, ... Ces données sont généralement acquises aux niveaux de puits, forés à travers les formations souterraines du champ pétrolier. A partir de ces informations, on extrapole des valeurs à l'ensemble de la grille.

La création d'une grille de simulation est bien connue des spécialistes.

Pour réaliser le calage du modèle géologique, on mesure des données dynamiques sur le champ exploité. Il peut s'agir de données de production telles que les volumes de fluides produits à chacun des puits ou des données de sismiques 4D.

Enfin, selon l'invention, on associe un réseau de failles à ce modèle géologique. Pour ce faire on doit définir ou acquérir les informations suivantes :

-  une loi de longueur de failles, généralement une loi puissance.

-  un loi d'orientation de faille, généralement une loi de probabilité de type Fisher. On peut également imposer une orientation pour différentes familles de failles à partir d'une carte d'orientation établie par les spécialistes de façon connue.

-  une dimension fractale, notée *Df*, de la population de failles.

Cette loi et cette dimension peuvent être issues de l'analyse de fracturations sur des carottes ou des données de diagraphies. Elles peuvent également être définies par un géologue, en fonction de ses connaissances de la région du champ pétrolier exploité.

2. Construction d'un réseau de failles

La création d'un réseau de failles qui respecte les paramètres statiques (dimension fractale, loi de longueur, nombre de fractures) se fait en trois étapes :

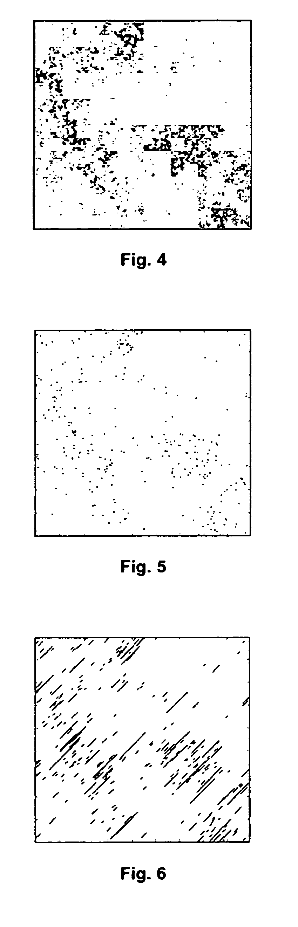

a- Construction d'une carte de densité multifractale (figure 4)

On appelle "carte de densité multifractale" une carte définissant une quantité ayant un caractère autosimilaire. L'autosimilarité est le caractère d'un objet dans laquelle on peut trouver des similarités en l'observant à différentes échelles. Cette notion d'autosimilarité est décrite grâce à l'approche multifractale.

Selon l'invention, la génération d'une carte de densité multifractale est réalisée au moyen d'une technique de cascades multiplicatives. Cet algorithme est décrit dans le cadre d'une grille en deux dimensions, mais il peut aisément se généraliser au cas une dimension (fractures le long d'un puits) ou trois dimensions.

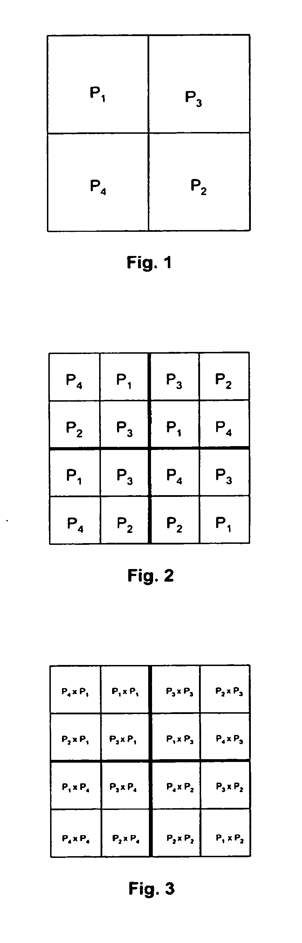

-  On choisit une taille de sous-grille de la grille de simulation d'écoulement. La taille de cette sous-grille correspond au nombre de cellules dans une direction, cette sous-grille formant un carré. Par exemple une sous-grille de taille 2, est une grille carrée 2x2.
-  Pour chacune des 4 cellules de cette sous-grille, on attribue un poids $P_i$, comme illustré sur la figure 1, qui représente la sous-grille 2x2.

Ces poids doivent respecter certaines conditions, liées notamment au caractère fractal que l'on souhaite imposer à cette carte de densité.

Selon un mode de réalisation, les poids $P_i$ respectent les conditions suivantes :

$$\begin{cases} P_1 + P_2 + P_3 + P_4 = 1 \\ P_1^{\,2} + P_2^{\,2} + P_3^{\,2} + P_4^{\,2} = 0.5^{Df} \\ P_i \geq 0 \end{cases} \qquad (1)$$

avec *Df la* dimension fractale de la population de points (centre des failles) que l'on désire obtenir.

Selon un autre mode de réalisation, au lieu de générer les poids à l'aide du système (1), ces derniers peuvent être tirés dans une loi de probabilité définie par l'utilisateur, par exemple une loi log-normale. La construction permet d'obtenir une structure auto-similaire mais ne permet pas de choisir la dimension fractale des points générés. Celle-ci dépend des paramètres statistiques de la loi de probabilité utilisée- Puis chaque cellule de la sous-grille est subdivisée en 4 sous-cellules identiques (de même forme et dimensions). On attribue de façon aléatoire à chacune des sous-cellules ainsi subdivisées, un des poids initiaux $P_i$. La figure 2 illustre cette étape.

- Ensuite, les poids de chaque sous-cellule sont multipliés par le poids de la cellule avant subdivision, comme illustré sur la figure 3.

Selon un mode de réalisation, on réutilise le même ensemble de poids à chaque subdivision. Selon un autre exemple de réalisation, on calcule de nouveaux poids respectant le système (1) à chaque subdivision.

- Ce procédé de subdivisions/multiplication par les poids de l'itération précédente est répété jusqu'à obtenir une résolution satisfaisante, comme illustrée sur la figure 4. Cette résolution est un paramètre de l'utilisateur et dépendra de la précision recherchée.

b- Positionnement des centres de failles (figure 5)

La carte de densité fractale générée par la méthode des cascades multiplicatives est utilisée pour générer une population de points, correspondant aux centres des failles sub-sismiques.
Pour ce faire on réalise un tirage d'une population de points contraints par cette carte densité. On peut utiliser une méthode séquentielle, basée sur l'inversion des fonctions de répartitions.
Pour cela, on calcule les fonctions de répartition $F(X)$ et $F_{Y|X}(Y)$ à l'aide de la carte de densité fractale, où X et Y correspondent aux coordonnées des points de la carte (centres des cellules de la grille). La fonction de répartition d'une variable aléatoire réelle caractérise la loi de probabilité de cette variable aléatoire réelle. La fonction de répartition correspond à l'intégrale numérique de la carte de densité. Puis, les coordonnées x et y de chaque point sont calculées a partir de nombres uniformes u et v tel que $x = F^{-1}(u)$ et $y = F^{-1}_{y|x}(v)$. Une telle méthode est décrite dans le document suivant :

S. Jenni, 2005, "Calage de la géométrie des réseaux de fractures aux données hydrodynamiques de production d'un champ pétrolier", Thèse Université Pierre et Marie Curie.

Avec cette méthode, une modification continue de la carte de densité engendre une modification continue de la position des points.
De plus, le caractère multifractal de la carte de densité permet d'obtenir une population de points fractals.
La figure 5 illustre le résultat de cette étape, issue du traitement de la figure 4.

c- Construction des failles (figure 6)

Une fois les centres des failles positionnés, on génère une faille pour chaque centre en considérant une orientation et une longueur de faille.
Les failles sont modélisées par des linéaments qui suivent la longueur et l'orientation choisie. Le modèle objet ainsi obtenu ne pouvant être utilisé directement pour réaliser des simulations d'écoulement, on calcule, de façon connue des spécialistes, ses propriétés équivalentes sur la grille de simulation (perméabilités et porosités).
Les longueurs de failles sont par exemple tirées dans la loi de longueur, puis attribuées aléatoirement à chacun des centres de failles.
Les orientations peuvent être tirées dans une loi de probabilité (loi de Fisher par exemple) ou être imposées par une carte d'orientation.

La figure 6 illustre le résultat de cette étape, issue du traitement de la figure 5.

### 3. Déformation graduelle du réseau de faille

Le réseau de failles ainsi construit, peut ensuite être modifié graduellement, de façon à respecter des données dynamiques par exemple (c'est ce que l'on appelle un calage d'historique).

Selon l'invention, le réseau de faille est déformé graduellement par une déformation continue de la carte de densité multifractale (figure 4) construite à l'étape 2.a, puis par une régénération des centres de failles. On obtient ainsi une déformation continue de leur position. C'est ce que l'on appelle une déformation de la cascade multiplicative.

La déformation graduelle de la cascade multiplicative consiste donc à exécuter plusieurs fois l'algorithme (étape 2), en faisant varier les paramètres de déformation de manière continue. Les étapes sont donc :

a- Déformation de la carte de densité multifractale

b- Positionnement des centres de failles (identique étape 2.b)

c- Construction des failles (identique étape 2.c)

Le résultat est un ensemble de cartes dont l'apparence varie de façon continue. Cet ensemble de cartes représente une chaîne de déformations graduelles du réseau de failles.

La déformation de la carte de densité multifractale se fait en modifiant de façon continue les poids $P_i$. Pour ce faire, on paramétrise les poids $P_i$, c'est-à-dire que l'on définit les poids à partir d'au moins un paramètre. Ce paramètre est appelé paramètre de déformation, car une modification de sa valeur entraine une modification de la valeur des poids, donc une modification de la carte de densité multifractale, et par conséquent une modification du réseau de failles. On peut identifier quatre valeurs de $P_i$ qui sont des fonctions continues par rapport à un seul paramètre $\theta$ :

$$\{ P1(\theta), P2(\theta), P3(\theta), P4(\theta) \} \qquad (2)$$

On peut par exemple utiliser la paramétrisation des poids $P_i$ suivante :

$$\begin{cases} P_1 + P_2 + P_3 + P_4 = 1 \\ P_1{}^2 + P_2{}^2 + P_3{}^2 + P_4{}^2 = \alpha \end{cases} \Leftrightarrow \begin{cases} P_1 = \dfrac{1}{2}\left(1 - P_3 - P_4 + \sqrt{-1 + \alpha + 2P_3 - 3P_3{}^2 + 2P_4 - 2P_3P_4 - 3P_4{}^2}\right) \\ P_2 = \dfrac{1}{2}\left(1 - P_3 - P_4 - \sqrt{-1 + \alpha + 2P_3 - 3P_3{}^2 + 2P_4 - 2P_3P_4 - 3P_4{}^2}\right) \end{cases}$$

On ajoute une relation entre $P_3$ et $P_4$ afin de réduire les degrés de liberté du système. Par exemple:

$$\begin{cases} P_1 + P_2 + P_3 + P_4 = 1 \\ P_1{}^2 + P_2{}^2 + P_3{}^2 + P_4{}^2 = \alpha \\ \dfrac{1}{4} - P_4 - P_3 = 0 \end{cases}$$

$$\Leftrightarrow \begin{cases} P_1(\theta) = \dfrac{1}{8}\left(3 - \sqrt{-11 + 32\alpha + 16\theta - 64\theta^2}\right) \\ P_2(\theta) = \dfrac{1}{8}\left(3 + \sqrt{-11 + 32\alpha + 16\theta - 64\theta^2}\right) \\ P_3(\theta) = \dfrac{1}{4} - \theta \\ P_4(\theta) = \theta \end{cases}$$

Lorsqu'on effectue les itérations de l'algorithme des cascades multiplicatives (étape 2), on tire aléatoirement un arrangement de poids $P_i$ à chaque subdivision de cellule. Afin d'obtenir une déformation continue de la carte, l'ensemble des arrangements doit être rigoureusement identique pour chaque élément de la chaîne de déformation graduelle. On appelle chaîne de déformation graduelle l'ensemble des cartes qui sont obtenues lors de la variation des paramètres de déformation graduelle. Pour que la modification des cartes soit continue, il faut que les arrangements de P1(t), P2 (t), P3(t) et P4(t) qui sont effectués à chaque itération soit identiques.

Une fois les arrangements fixés, on doit déterminer la valeur du paramètre θ nécessaire pour calculer les poids.

On peut par exemple, utiliser une valeur unique pour tous les poids. Les poids $P_i$ sont alors identiques pour chacune des subdivisions. Le paramètre θ est alors le paramètre à faire varier pour déformer la carte.

4. Calage aux données de production ("history matching")

L'objectif du calage d'historique (« history matching ») est d'ajuster certains paramètres d'un modèle géologique de réservoir de façon à reproduire des données dynamiques mesurées sur le terrain. Il peut s'agir de données de production ou de données issues de sismiques répétées (4D).

Selon l'invention, on modifie le réseau de faille du modèle géologique. Le calage d'historique consiste alors à réaliser les étapes suivantes, partant d'un premier réseau de faille construit selon l'étape 2 :

- on mesure des données dynamiques sur le terrain ;

- on simule ces données dynamiques au moyen d'un simulateur d'écoulement, pour le réseau de faille initial ;

- on déforme continument le réseau de faille du modèle géologique selon l'étape 3, afin de minimiser l'écart entre les données dynamiques mesurées et les données dynamique simulées.

Cette dernière étape est réalisée au moyen d'un optimiseur, qui minimise une fonction objectif. Cette fonction objectif mesure l'écart entre les données dynamiques observées et simulées. Ainsi, si la réponse hydrodynamique de la simulation diffère des données observées, l'optimiseur modifie la position des fractures en agissant sur le paramètre θ , jusqu'à ce que la réponse hydrodynamique soit satisfaisante, c'est-à-dire jusqu'a ce que l'écart entre les données dynamiques observées et simulées soit faible ou ne diminue plus. Le déplacement continu des fractures permet de rendre les fonctions objectifs les plus linéaires possible, accélérant donc l'optimisation.

**Variantes**

Selon un mode de réalisation, si l'optimisation globale de la position des failles ne permet pas d'obtenir un calage satisfaisant, on modifie la position des failles de façon locale.

Pour ce faire, on définit des zones géographiques sur la grille de simulation d'écoulement. On définit une telle zone en sélectionnant les cellules pour l'un des niveaux de raffinement utilisés durant les cascades multiplicatives : si l'on veut définir une zone de façon grossière, on choisit un niveau de raffinement faible ; dans le cas contraire, on choisit un niveau de raffinement élevé. La définition des zones peut se faire en fonction de la disposition des puits. On peut ainsi définir une zone pour chaque groupe de puits injecteurs/producteurs. Ainsi, l'amélioration du calage d'un groupe de puits ne risque pas de détériorer celui d'un autre.

Une fois la zone définie, on modifie les poids $P_i$ des cellules contenues dans la zone à l'aide de paramètres de déformation spécifiques à cette zone.

Selon un mode de réalisation, si la cascade est construite à l'aide de poids tirés dans une loi de probabilité, on utilise la méthode de déformations graduelles pour les déformer. La dimension fractale peut alors varier au cours de cette déformation, puisqu'elle n'est pas imposée en entrée. La technique de déformations graduelles est décrite dans le document suivant par exemple : US 6618695 ou FR 2780798)

Selon un autre mode de réalisation, si le réservoir à modéliser contient des failles sismiques, on peut effectuer un conditionnement à ces dernières. En faisant l'hypothèse que les failles sismiques sont fractales à grande échelle, on calcule une carte de densité de failles sismique à une résolution grossière. Cette densité peut être calculée en calculant la longueur de faille à l'intérieur de chacune des cellules d'une carte superposée sur le réseau. La résolution initiale pour cette carte est choisie par l'utilisateur. Cette carte est ensuite raffinée par l'algorithme des cascades multiplicatives Pour ce faire, on utilise la carte faible résolution comme itération 0 dans l'algorithme des cascades multiplicatives.

**Exemple de réalisation**

La méthode de calage est illustrée sur l'exemple suivant, dans lequel on construit un réseau de failles de référence, c'est-à-dire le réseau que l'on souhaite reconstruire à partir de la méthode. Puis on applique la méthode.

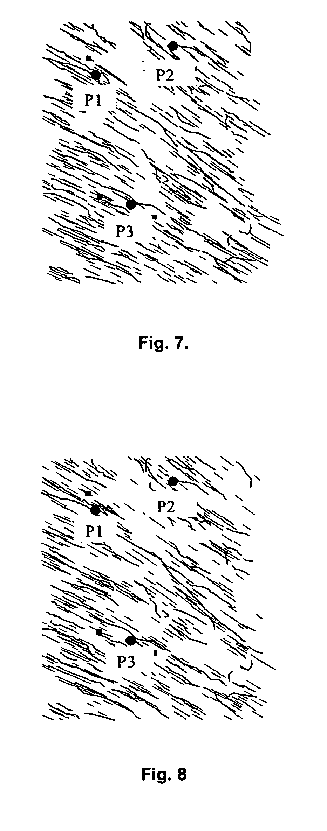

On crée le réseau de référence en ajoutant 450 failles sub-sismiques (stochastiques) à un réseau de failles sismiques (déterministes). La dimension fractale est de 1.65. La figure 7 illustre ce réseau de référence. Les failles sismiques déterministes sont en gras. Les puits injecteurs sont représentés par des carrés, les producteurs par des cercles.

Le réseau de failles est discrétisé sur une grille de simulation d'écoulement. On simule un scénario de "waterflooding" sur dix ans qui sert de simulation de référence. Les puits injecteurs situés à proximité des puits producteurs P1 et P2 injectent chacun à 800m3/j. Les deux puits injecteurs au pourtour du puits producteur P3 injectent chacun à 400m3/j. La perméabilité de matrice est de 50mD. Celle des failles est de 3.5E5 mD. Elles ont une ouverture de 0.1 m.

Étape 2 de la méthode : Construction d'un réseau de failles

Lorsqu'on modifie le germe de tirage des arrangements de $P_i$ qui initialise l'algorithme des cascades multiplicatives, on obtient une réalisation différente pour le réseau de failles, illustré sur la figure 8.

Les résultats des simulations d'écoulement effectuées sur ce nouveau réseau (figure 8) diffèrent donc du modèle de référence (figure 7). Les simulations d'écoulement sont réalisées au moyen d'un logiciel, appelé simulateur d'écoulement par les spécialistes. On peut par exemple utiliser le logiciel Puma$^{Flow}$ (IFP, France). On utilise les données du ratio volume d'eau/volume d'huile produits aux puits ("water/cut") car cette mesure permet de caractériser la connectivité crée par le réseau de failles.

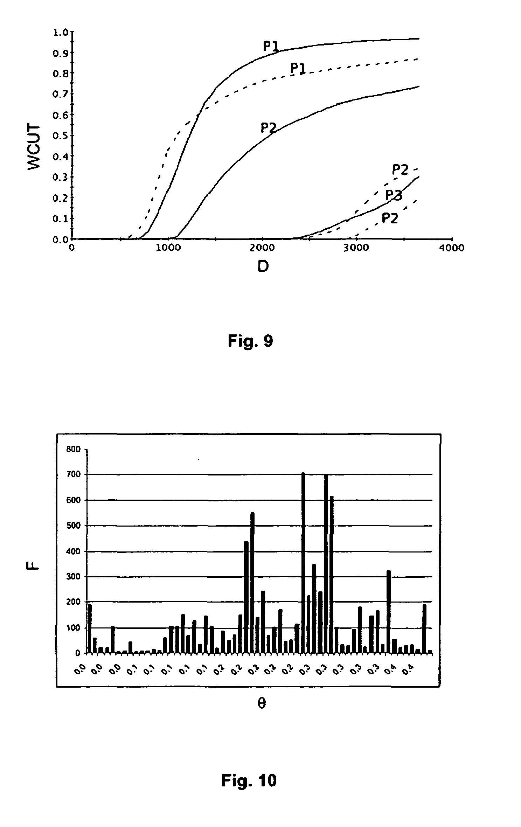

La figure 9 illustre ces données de production (WCUT - sans dimension) pour les puits P1, P2 et P3, en fonction du temps (D) en jours. Les données WCUT issues du simulateur d'écoulement pour le réseau de faille de référence (celui de la figure 7) sont représentées en pointillé, et celles obtenues pour le réseau de faille initial (celui de la figure 8) sont représentées en trait continu.

Étape 3 de la méthode : Déformation graduelle du réseau de faille

Cette étape consiste à réaliser un calage aux données de production. En modifiant le paramètre de déformation graduelle ($\theta$), on réduit l'écart entre les données de référence et les données simulées.

L'évolution de la fonction objectif lors de cette optimisation est illustré sur la figure 10. L'axe des abscisses représente la valeur de $\theta$, et l'axe des ordonnées représente la valeur de la fonction objectif (F). Celle-ci est par exemple définie comme la différence au carrée des données WCUT mesurées et simulées.

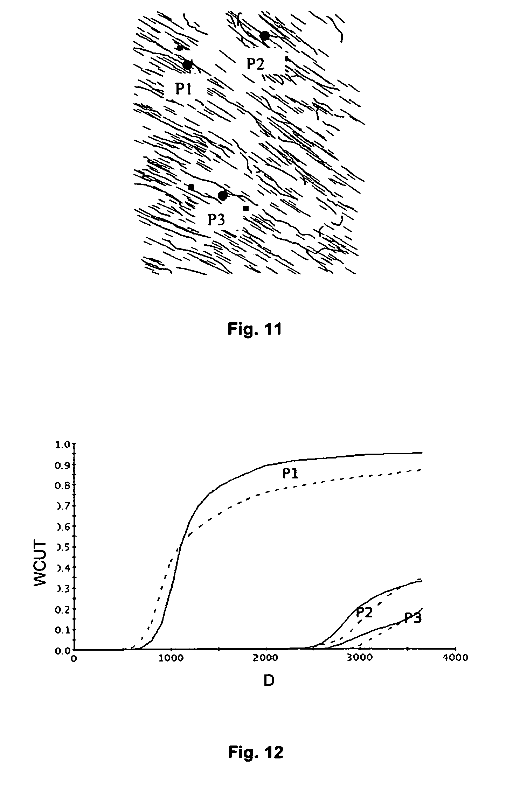

Pour une certaine valeur du paramètre $\theta$ (0.033), on obtient un réseau de faille optimal pour le modèle géologique. La géométrie de ce réseau de faille permettant de reproduire l'historique de production est représentée sur la figure 11.

La figure 12 illustre les données de production (WCUT - sans dimension) pour les puits P1, P2 et P3, en fonction du temps (D) en jours. Les données WCUT issues du simulateur d'écoulement pour le réseau de faille de référence (celui de la figure 7) sont représentées en pointillé, et celles obtenues pour le réseau de faille optimal (celui de la figure 11) sont représentées en trait continu.

La méthode selon l'invention, permet une optimisation de l'exploitation du milieu souterrain. En effet, de façon connue des spécialistes, la construction d'un modèle géologique ou d'une grille de simulation d'écoulement calée sur les données dynamiques, permet de définir un schéma d'exploitation optimal du milieu.

On peut par exemple, déterminer la capacité d'injection de chaque puits traversant le milieu souterrain à partir d'une modélisation des écoulements de fluides réalisée sur la grille de simulation d'écoulement associée au réseau de failles callé sur les données dynamiques. On peut alors déterminer la capacité de production de chaque puits traversant le milieu souterrain. On peut alors optimiser la production du fluide, tel que des hydrocarbures, du milieu souterrain, en réalisant au moins l'une des étapes suivantes :

- réalisation de nouveaux forages : si l'on constate qu'une partie des hydrocarbures ne peut pas être atteinte lors de la production;

- modification de la pression d'injection dans le cadre de technique EOR : si l'on constate que les hydrocarbures ont du mal à migrer au sein du réservoir;

- modification du débit de production.


**Revendications**

1. Méthode pour exploiter un milieu souterrain à partir d'une grille de simulation d'écoulement comportant un ensemble de cellules discrétisant ledit milieu souterrain, et à partir de mesure de données dynamiques, dans laquelle on associe un réseau de failles à ladite grille de simulation d'écoulement, **caractérisée en ce que** :

    a. on construit ledit réseau de failles en réalisant les étapes suivantes :

        i- on construit une carte de densité multifractale au moyen d'une technique de cascades multiplicatives;
        ii- on construit une carte de centre de failles en réalisant un tirage aléatoire dans ladite carte de densité multifractale ;
        iii- on génère une faille pour chaque centre de failles;

    b. on réalise un calage d'historique de ladite grille en déformant ledit réseau de failles par une déformation continue de la carte de densité multifractale, puis en réitérant les étapes ii et iii, afin de reproduire par une simulation d'écoulement lesdites données dynamiques; et
    c. on exploite ledit milieu selon un schéma d'exploitation défini à partir de ladite grille ainsi calée.

2. Méthode selon la revendication 1, dans laquelle on construit ladite carte de densité multifractale en réalisant les étapes suivantes :

    - on choisit une dimension fractale *Df* des centres des failles que l'on souhaite générer;
    - on construit ladite carte de densité multifractale au moyen d'une technique de cascades multiplicatives comprenant la subdivision de chaque cellule en p sous-cellules, l'attribution d'un poids à chacune desdites sous-cellules, lesdits poids étant définis en fonction de ladite dimension fractale, la multiplication de chaque poids de chaque sous-cellule par le poids de la cellule avant subdivision, ce procédé de subdivisions/multiplication par les poids de l'itération précédente étant répété jusqu'à obtenir une résolution choisie.

3. Méthode selon la revendication 2, dans laquelle on subdivise chaque cellule en quatre cellules, et on attribue de nouveaux poids P1, P1, P3 et P4 respectant le système suivant à chaque subdivision :

$$\begin{cases} P_1 + P_2 + P_3 + P_4 = 1 \\ P_1^{\;2} + P_2^{\;2} + P_3^{\;2} + P_4^{\;2} = 0.5^{Df} \\ P_i \geq 0 \end{cases}$$

4. Méthode selon la revendication 2, dans laquelle on réutilise le même ensemble de poids à chaque subdivision.

5. Méthode selon l'une des revendications précédentes, dans laquelle on génère une faille pour chaque centre de failles en considérant une orientation choisie ou tirée dans une première loi de probabilité et une longueur de faille choisie ou tirée dans une seconde loi de probabilité.

6. Méthode selon l'une des revendications précédentes, dans laquelle la déformation continue de la carte de densité multifractale est réalisée en définissant lesdits poids à partir d'au moins un paramètre et en modifiant ce paramètre.

7. Méthode selon l'une des revendications précédentes, dans laquelle on modifie la position des failles de façon locale, après définition de zones géographiques sur la grille de simulation d'écoulement.

**Claims**

1. A method of developing an underground medium from a flow simulation grid comprising a set of cells discretizing said underground medium, and from dynamic data measurements, wherein a fault network is associated with said flow simulation grid, **characterized in that** it comprises:

   a. constructing said fault network by carrying out the following stages:

      i-constructing a multifractal density map by means of a multiplicative cascade technique,
      ii-constructing a fault centre map by performing a random draw in said multifractal density map,
      iii-generating a fault for each fault centre,

   b. carrying out history matching of said grid by deforming said fault network through continuous deformation of the multifractal density map, then by reiterating stages ii and iii in order to reproduce by means of a flow simulation said dynamic data, and
   c. developing said medium according to a development scheme defined from said grid thus matched.

2. A method as claimed in claim 1, wherein said multifractal density map is constructed by carrying out the following stages:

   - selecting a fractal dimension $Df$ tor the fault centres to be generated.
   - constructing said multifractal density map by means of a multiplicative cascade technique comprising subdividing each cell into p sub-cells, assigning a weight to each one of said sub-cells, said weights being defined according to said fractal dimension, multiplying each weight of each sub-cell by the weight of the cell before subdivision, this process of subdividing/multiplying by the weights of the previous iteration being repeated until a selected resolution is obtained.

3. A method as claimed in claim 2, wherein each cell is subdivided into four cells, and new weights P1, P2. P3 and P4 respecting the following system are assigned upon each subdivision:

$$\begin{cases} P_1 + P_2 + P_3 + P_4 = 1 \\ P_1^2 + P_2^2 + P_3^2 + P_4^2 = 0.5^{Df} \\ P_i \geq 0 \end{cases}$$

4. A method as claimed in claim 2, wherein the same set of weights is used again for each subdivision.

5. A method as claimed in any one of the previous claims, wherein a fault is generated for each fault centre by considering an orientation selected or drawn in a first probability law and a fault length selected or drawn in a second probability law.

6. A method as claimed in any one of the previous claims, wherein continuous deformation of the multifractal density map is performed by defining said weights from at least one parameter and by modifying this parameter.

7. A method as claimed in any one of the previous claims, wherein the position of the faults is modified locally, after defining geographical zones on the flow simulation grid.

**Patentansprüche**

1. Verfahren zum Ausbeuten einer unterirdischen Umgebung ausgehend von einem Strämungssimulationsraster, das eine Menge von Zellen umfasst, die die unterirdische Umgebung diskretisieren, und ausgehend von der Messung dynamischer Daten, wobei ein Netz von Verwerfungen mit dem Strömungssimulationsraster verknüpft wird, **dadurch gekennzeichnet, dass**:

   a das Netz von Verwerfungen durch das Ausführen der folgenden Schritte konstruiert wird:

       i- Konstruieren einer multifraktalen Dichtekarte mittels einer Technik multiplikativer Kaskaden;
       ii- Konstruieren einer Verwerfungsmittenkarte durch Ausführen eines zufälligen Ziehens in der multifraktalen Dichtekarte;
       iii- Generieren einer Verwerfung für jede Verwerfungsmitte;

   b eine Vorgeschichteabstimmung des Rasters durch Verformen des Verwerfungsnetzes durch eine kontinuierliche Verformung der multifraktalen Dichtekarte und dann durch Wiederholen der Schritte ii und iii durchgeführt wird, um die dynamischen Daten durch eine Strömungssimulation wiederzugeben; und
   c die Umgebung gemäß einem Ausbeutungsschema ausgebeutet wird, das ausgehend von dem so abgestimmten Raster definiert wird.

2. Verfahren nach Anspruch 1, wobei die multifraktale Dichtekarte durch Ausführen der folgenden Schritte konstruiert Wird:

   - Wählen einer Fraktaldimension *Df* der Mitten der Verwerfungen, deren Generierung gewünscht wird;
   - Konstruieren der multifraktalen Dichtekarfe mittels einer Technik multiplikativer Kaskaden, die die Unterteilung jeder Zelle in p Tellzellen, die Zuordnung eines Gewichts zu jeder der Teilzellen, wobei die Gewichte als Funktion der Fraktaldimension definiert sind, und die Multiplikation jedes Gewichts von jeder Teilzelle mit dem Gewicht der Zelle vor der Unterteilung umfasst, wobei dieses Verfahren der Unterteilungen/Multiplikation mit den Gewichten der vorhergehenden Iteration wiederholt wird, bis eine gewählte Auflösung erhalten wird

3. Verfahren nach Anspruch 2, wobei jede Zelle in vier Zellen unterteilt wird und neue Gewichte P1, P1, P3 und P4 zugeordnet werden, die das System im Anscnluss an jede Unterteilung einhalten:

$$\begin{cases} P_1 + P_2 + P_3 + P_4 = 1 \\ P_1^2 + P_2^2 + P_3^2 + P_4^2 = 0.5^{Df} \\ P_t \geq 0 \end{cases}$$

4. Verfahren nach Anspruch 2, wobei dieselbe Menge von Gewichten bei jeder Unterteilung wiederverwendet wird.

5. Verfahren nach einem der vorhergehenden Ansprüche, wobei eine Verwerfung für jede Verwerfungsmitte unter Berücksichtigung einer gewählten oder in einem ersten Wahrscheinlichkeitsgesetz gezogenen Ausrichtung und einer gewählten oder in einem zweiten Wahrscheinlichkeitsgesetz gezogenen Verwerfungslänge generiert wird.

6. Verfahren nach einem der vorhergehenden Ansprüche, wobei die kontinuierliche Verformung der multifraktalen Dichtekarte durch Definieren der Gewichte ausgehend von mindestens einem Parameter und durch Änderung dieses Parameters ausgeführt wird.

7. Verfahren nach einem der vorhergehenden Ansprüche, wobei die Position der Verwerfungen auf lokale Weise nach der Definition von geografischen Zonen auf dem Strömungssimulationsraster geändert wird.

| | |
|---|---|
| P₁ | P₃ |
| P₄ | P₂ |

**Fig. 1**

| | | | |
|---|---|---|---|
| P₄ | P₁ | P₃ | P₂ |
| P₂ | P₃ | P₁ | P₄ |
| P₁ | P₃ | P₄ | P₃ |
| P₄ | P₂ | P₂ | P₁ |

**Fig. 2**

| | | | |
|---|---|---|---|
| P₄ x P₁ | P₁ x P₁ | P₃ x P₃ | P₂ x P₃ |
| P₂ x P₁ | P₃ x P₁ | P₁ x P₃ | P₄ x P₃ |
| P₁ x P₄ | P₃ x P₄ | P₄ x P₂ | P₃ x P₂ |
| P₄ x P₄ | P₂ x P₄ | P₂ x P₂ | P₁ x P₂ |

**Fig. 3**

**Fig. 4**

**Fig. 5**

**Fig. 6**

**Fig. 7.**

**Fig. 8**

**Fig. 9**

**Fig. 10**

Fig. 11

Fig. 12

## RÉFÉRENCES CITÉES DANS LA DESCRIPTION

**Documents brevets cités dans la description**

- US 7483822 B
- FR 2857764
- US 6618695 B
- FR 2780798

**Littérature non-brevet citée dans la description**

- **LIN Y. HU ; SANDRA JENNI.** History Matching of object-based stochastic reservoir models. *SPE Journal,* Septembre 2005, vol. 10 (3), 81503
- **MC. CACAS ; JM. DANIEL ; J. LETOUZEY.** Nested geological modelling of naturally fractured réservoirs. *Petroleum Geoscience,* 2001, vol. 7, S43-S52
- **BOUR, O ; PH. DAVY.** Connectivity of random fault networks following a power-law fault length distribution. *Water Resour. Res.,* 1997, vol. 33 (7), 1567-1583
- **S. JENNI.** Calage de la géométrie des réseaux de fractures aux données hydrodynamiques de production d'un champ pétrolier. *Thèse Université Pierre et Marie Curie,* 2005